# EUROPEAN PATENT APPLICATION

(11) **EP 4 422 310 A1**
(43) Date of publication of application: **28.08.2024**
(21) Application number: 21961022.7
(22) Date of filing: 22.10.2021
(51) Int. Cl.: H04W 72/04, H04W 84/18, H04B 17/382

(54) **SENSING SIGNAL POWER CONTROL METHOD AND APPARATUS, AND DEVICE AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: Kudlek, Franz Thomas
(86) International application number: PCT/CN2021/125508
(87) International publication number: WO 2023/065273

(57) **Abstract**

Provided in the present disclosure are a sensing signal power control method and apparatus, and a device and a storage medium. The sensing signal power control method is executed by a user equipment, and comprises: sending a first message to a network device, wherein the first message comprises a feature of a sensing service; receiving a second message from the network device, wherein the second message comprises a sensing signal power parameter; acquiring the movement velocity of a sensed object; and determining a sensing signal transmission power on the basis of the sensing signal power parameter and the movement velocity of the sensed object. By using the method, rational determination of a sensing signal transmission power can be realized, and unnecessary interference of a transmitted sensing signal to another device is avoided.

## Description

### TECHNICAL FIELD

The present disclosure relates to the field of wireless communication technology, and in particular, to a sensing signal power control method and apparatus, and device and storage medium.

### BACKGROUND

The mobile communication system is a wireless communication system, which mainly includes cellular systems, trunking systems, AdHoc network systems, satellite communication systems, packet wireless networks, cordless telephone systems, radio paging systems, and the like.

The sensing system is also known as Radar (Radio detection and ranging), that is, it uses radio methods to discover targets and determine their spatial positions.

The sensing signal transmitted by the user device may cause interference to other devices, which requires controlling the transmission power of the sensing signal transmitted by the user device.

### SUMMARY

The present disclosure provides a method, apparatus, device and storage medium for sensing signal power control.

According to a first aspect of an embodiment of the present disclosure, a method for controlling sensing signal power is provided, and the method is executed by a user device, including:
sending a first message to a network device, the first message including a characteristic of a sensing service;
receiving a second message from the network device, the second message including a sensing signal power parameter;
obtaining a movement velocity of the perceived object; and
determining a sensing signal transmission power based on the sensing signal power parameter and the movement velocity of the sensed object.

In one implementation, the sensing signal power parameter includes at least one of
maximum allowable transmission power, initial transmission power, power adjustment step, and receiving power margin.

In one implementation, the determining the sensing signal transmission power based on the sensing signal power parameter and the movement velocity of the sensed object includes:
determining a first transmission power based on the sensing signal power parameter; and
determining the sensing signal transmission power based on the first transmission power and the movement velocity of the sensed object.

In one implementation, determining the first transmission power based on the sensing signal power parameter includes:
obtaining a receiver sensitivity of the user device; and
determining the first transmission power based on the sensing signal power parameter and the receiver sensitivity.

In one implementation, determining the first transmission power based on the sensing signal power parameter and the receiver sensitivity includes:
determining a current transmission power to be the initial transmission power, and sequentially increasing the current transmission power by the power adjustment step; and
transmitting the sensing signal based on each current transmission power, obtaining a reflected power of a reflected signal of the sensing signal, obtaining a power difference value of the reflected power minus the receiver sensitivity, and until the power difference value is greater than or equal to the receiving power margin, determining the first transmission power to be the current transmission power.

In one implementation, determining the sensing signal transmission power based on the first transmission power and the movement velocity of the sensed object includes:
determining a path loss variation of the sensing signal transmission power based on the movement velocity of the sensed object; and
determining the sensing signal transmission power based on the first transmission power and the path loss variation.

In one implementation, determining the sensing signal transmission power based on the first transmission power and the path loss variation includes:
determining a second transmission power to be a sum of the first transmission power and the path loss variation; and
in response to the second transmission power being less than or equal to a maximum allowable transmission power, determining the sensing signal transmission power to be the second transmission power.

In one implementation, determining the sensing signal transmission power based on the first transmission power and the path loss variation includes:
determining a second transmission power to be a sum of the first transmission power and the path loss variation; and
in response to the second transmission power being greater than a maximum allowable transmission power, determining the sensing signal transmission power to be the maximum allowable transmission power.

In one implementation, the movement velocity of the sensed object is a radial movement speed of the sensed object.

According to a second aspect of an embodiment of the present disclosure, a method for controlling sensing signal power is provided, and the method is executed by a network device, including:
receiving a first message from a user device, the first message including a characteristic of a sensing service of the user device;
determining a sensing signal power parameter based on the characteristic of the sensing service; and
sending a second message to the user device, the second message including the sensing signal power parameter.

In one implementation, the sensing signal power parameter includes at least one of
maximum allowable transmission power, initial transmission power, power adjustment step, and receiving power margin.

According to a third aspect of an embodiment of the present disclosure, an apparatus for allocating sensing resource is provided, and the method is applied to a network device, including:
a sending module, configured to send a first message to a network device, the first message including a characteristic of a sensing service;
a receiving module, configured to receive a second message from the network device, the second message including a sensing signal power parameter; and
a processing module configured to obtain a movement velocity of the perceived object, and determine a sensing signal transmission power based on the sensing signal power parameter and the movement velocity of the sensed object.

According to a fourth aspect of an embodiment of the present disclosure, an apparatus for using sensing resource is provided, and the method is applied to a user device, including:
a receiving module, configured to receive a first message from a user device, the first message including a characteristic of a sensing service of the user device;
a processing module, configured to determine a sensing signal power parameter based on the characteristic of the sensing service; and
a sending module, configured to send a second message to the user device, the second message including the sensing signal power parameter.

According to a fifth aspect of an embodiment of the present disclosure, a network side device is provided, including:
a processor; and
a memory used to store instructions executable by the processor;
wherein, the processor is configured to execute executable instructions in the memory to implement steps of the above method for controlling sensing signal power.

According to a sixth aspect of an embodiment of the present disclosure, a mobile terminal is provided, including:
a processor; and
a memory used to store instructions executable by the processor;
wherein, the processor is configured to execute executable instructions in the memory to implement steps of the above method for controlling sensing signal power.

According to a seventh aspect of an embodiment of the present disclosure, a non-transitory computer-readable storage medium on which executable instructions are stored is provided, when the executable instructions are executed by a processor, steps of the above method for controlling sensing signal power are implemented.

The technical solution provided by the embodiments of the present disclosure may include the following beneficial effects: the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristics of the sensing service and the movement velocity of the sensed object, so as to achieve a reasonable determination of the sensing signal transmission power and avoid unnecessary interference of the transmitted sensing signal to other devices.

It is to be understood that both the foregoing general description and the following detailed description are exemplary and explanatory only and are not restrictive of the present disclosure.

### BRIEF DESCRIPTION OF THE DRAWINGS

The drawings described here are used to provide a further understanding of the embodiments of the present disclosure and constitute a part of this application. The schematic embodiments of the embodiments of the present disclosure and their descriptions are used to explain the embodiments of the present disclosure and do not constitute an improper limitation on the embodiments of the present disclosure. In the drawings:
FIG. 1 is a flow chart of a method for allocating sensing resource according to an exemplary embodiment;
FIG. 2 is a flowchart of a method for allocating sensing resource according to an exemplary embodiment;
FIG. 3 is a flowchart of a method for allocating sensing resource according to an exemplary embodiment;
FIG. 4 is a flow chart of a method for allocating sensing resource according to an exemplary embodiment;
FIG. 5 is a flow chart of a method for allocating sensing resource according to an exemplary embodiment;
FIG. 6 is a flowchart of a method for allocating sensing resource according to an exemplary embodiment;
FIG. 7 is a flow chart of a method for allocating sensing resource according to an exemplary embodiment;
FIG. 8 is a flowchart of a method for allocating sensing resource according to an exemplary embodiment;
FIG. 9 is a block diagram of an apparatus for allocating sensing resource according to an exemplary embodiment;
FIG. 10 is a block diagram of an apparatus for using sensing resource according to an exemplary embodiment;
FIG. 11 is a structural diagram of an apparatus for using sensing resource according to an exemplary embodiment;
FIG. 12 is a structural diagram of an apparatus for allocating sensing resource according to an exemplary embodiment.

### DETAILED DESCRIPTION

The embodiments of the present disclosure will now be further described with reference to the accompanying drawings and specific implementations.

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of the present disclosure. Rather, they are merely examples of apparatus and methods consistent with aspects of the disclosure as detailed in the appended claims.

It should be noted that an embodiment of the present disclosure may include multiple steps; for convenience of description, these steps are numbered; however, these numbers do not limit the execution time slots and execution order between the steps; these steps can be implemented in any order, and the embodiments of the present disclosure are not limited thereto.

In mobile communication systems, mobile communication uses radio waves for information transmission. Radar is also called "radio positioning." It emits electromagnetic waves to illuminate the target and receives its echo, thereby obtaining information such as the distance from the target to the electromagnetic wave emission point, distance change rate (radial speed), orientation, altitude and other information.

In mobile communication systems, mobile communication uses radio waves for information transmission. Radar is also referred to as "radio positioning." It emits electromagnetic waves to illuminate the target and receives its echo, thereby obtaining information such as the distance from the target to the electromagnetic wave emission point, distance change rate (radial speed), orientation, altitude and other information.

With the cooperation of the mobile communication system, the transmission power of the sensing signal transmitted by the user device can be controlled to prevent the user device from transmitting the sensing signal and causing interference to other devices.

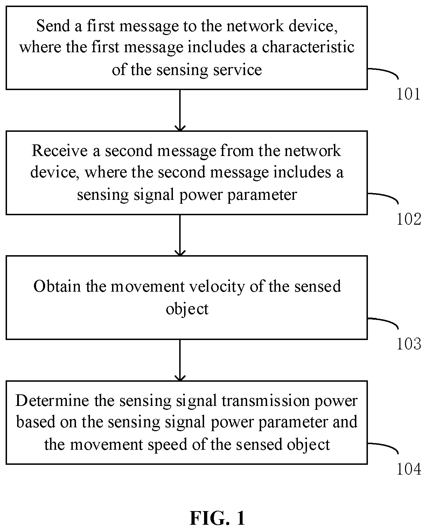

Embodiments of the present disclosure provide a method for controlling sensing signal power, which is executed by a user device. This method can be executed independently or in conjunction with any other embodiment of the present disclosure. FIG. 1 is a flow chart of a sensing signal power control method according to an exemplary embodiment. As shown in FIG. 1, the method includes:
Step 101: Send a first message to the network device, where the first message includes a characteristic of the sensing service;
Step 102: Receive a second message from the network device, where the second message includes a sensing signal power parameter;
Step 103, Obtain the movement velocity of the sensed object;
Step 104: Determine the sensing signal transmission power based on the sensing signal power parameter and the movement velocity of the sensed object.

In one embodiment, the user device sends a first message to the network device, the first message includes a sensing service characteristic, and then receives a second message from the network device, the second message includes a sensing signal power parameter; the user device obtains the movement velocity of the sensed object, and determines the sensing signal transmission power based on the sensing signal power parameter and the movement velocity of the sensed object.

In one embodiment, the user device sends a first message to the network device. The first message includes a characteristic of the sensing service. The characteristic of the sensing service includes at least one of the following: sensing distance, sensing range, size of the sensed object, shape of the sensed object and motion state of the sensed object. Then a second message is received from the network device, and the second message includes the sensing signal power parameter. The sensing signal power parameter includes at least one of the following: maximum allowable transmission power, initial transmission power, power adjustment step, and receiving power margin. The user device obtains the movement velocity of the sensed object, and determines the sensing signal transmission power based on the sensing signal power parameters and the movement velocity of the sensed object.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

Embodiments of the present disclosure provide a sensing signal power control method, which is executed by a user device. This method can be executed independently or in conjunction with any other embodiment of the present disclosure. The method includes: sending a first message to a network device, where the first message includes a characteristic of a sensing service; receiving a second message from the network device, where the second message includes a sensing signal power parameter; obtaining the movement velocity of a sensed object; and determining the sensing signal transmission power based on the sensing signal power parameter and the movement velocity of the sensed object; wherein the sensing signal power parameter includes at least one of the following: maximum allowable transmission power, initial transmission power, power adjustment step and receiving power margin.

In one embodiment, the user device sends a first message to the network device, the first message includes the characteristic of the sensing service, and then receives a second message from the network device, the second message includes the sensing signal power parameter, and the sensing signal power parameter includes at least one of the following: maximum allowable transmission power, initial transmission power, power adjustment step, and receiving power margin; the user device obtains the movement velocity of the sensed object, and determines the sensing signal transmission power based on the sensing signal power parameter and the movement velocity of the sensed object.

It should be noted that not all sensing signal power parameters, such as the maximum allowable transmission power, initial transmission power, power adjustment step, and receiving power margin, may be received from the network device. In a scenario where some sensing signal power parameters are not all received from the network device, the user device can determine the sensing signal power parameters that have not been received from the network device based on the default settings, or can determine the sensing signal power parameters that have not been received from the network device based on the provisions of the network protocol.

In one embodiment, the user device sends a first message to the network device, the first message including the characteristic of the sensing service, and then receives a second message from the network device, the second message including: maximum allowable transmission power, receiving power margin; the user device determines the initial transmission power and power adjustment step based on the provisions of the network protocol; and the user device obtains the movement velocity of the sensed object, and determines the sensing signal transmission power based on the sensing signal power parameter and the movement velocity of the sensed object.

In one embodiment, the user device sends a first message to the network device, the first message including characteristic of the sensing service, and then receives a second message from the network device, the second message including: maximum allowable transmission power, initial transmission power, receiving power margin; the user device determines the power adjustment step based on the default settings; and the user device obtains the movement velocity of the sensed object, and determines the sensing signal transmission power based on the sensing signal power parameter and the movement velocity of the sensed object.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

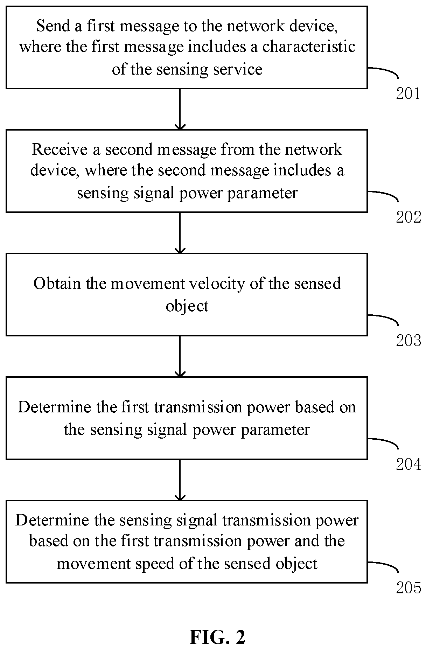

Embodiments of the present disclosure provide a sensing signal power control method, which is executed by a user device. This method can be executed independently or in conjunction with any other embodiment of the present disclosure. FIG. 2 is a flow chart of a sensing signal power control method according to an exemplary embodiment. As shown in FIG. 2, the method includes:
Step 201: Send a first message to the network device, where the first message includes a characteristic of the sensing service;
Step 202: Receive a second message from the network device, where the second message includes a sensing signal power parameter;
Step 203, Obtain the movement velocity of the sensed object;
Step 204: Determine the first transmission power based on the sensing signal power parameter;
Step 205: Determine the sensing signal transmission power based on the first transmission power and the movement velocity of the sensed object;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, and the sensing signal power parameter including at least one of the following: maximum allowable transmission power, initial transmission power, power adjustment step, and receiving power margin; the user device obtains the movement velocity of the sensed object; and the user device determines the first transmission power based on the sensing signal power parameter, and determines the sensing signal transmission power based on the first transmission power and the movement velocity of the sensed object.

In one embodiment, the user device sends a first message to the network device. The first message includes a characteristic of the sensing service. The characteristic of the sensing service includes at least one of the following: sensing distance, sensing range, size of the sensed object, shape of the sensed object and motion state of the sensed object. Then a second message is received from the network device, the second message including the sensing signal power parameter, and the sensing signal power parameter including at least one of the following: maximum allowable transmission power, initial transmission power, power adjustment step, and receiving power margin. The user device obtains the movement velocity of the sensed object. The user device determines the first transmission power based on the sensing signal power parameter, and determine the sensing signal transmission power based on the first transmission power and the movement velocity of the sensed object.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

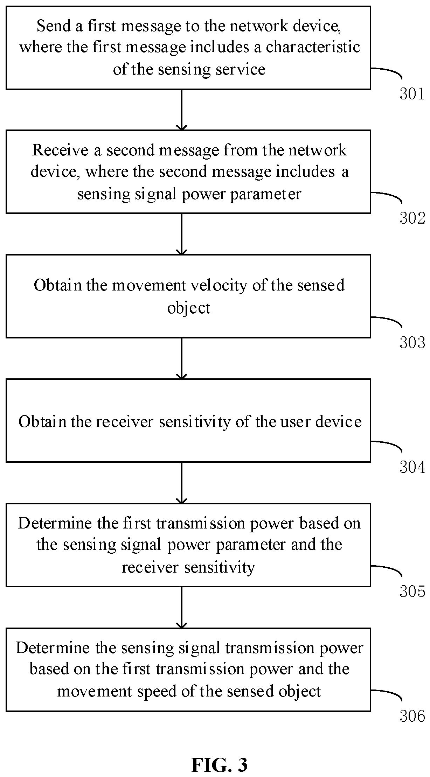

Embodiments of the present disclosure provide a sensing signal power control method, which is executed by a user device. This method can be executed independently or in conjunction with any other embodiment of the present disclosure. FIG. 3 is a flow chart of a sensing signal power control method according to an exemplary embodiment. As shown in FIG. 3, the method includes:
Step 301: Send a first message to the network device, where the first message includes a characteristic of the sensing service;
Step 302: Receive a second message from the network device, where the second message includes a sensing signal power parameter;
Step 303, Obtain the movement velocity of the sensed object;
Step 304: Obtain the receiver sensitivity of the user device;
Step 305: Determine the first transmission power based on the sensing signal power parameter and the receiver sensitivity;
Step 306: Determine the sensing signal transmission power based on the first transmission power and the movement velocity of the sensed object;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, the sensing signal power parameter includes at least one of the following: maximum allowable transmission power, initial transmission power, power adjustment step, and receiving power margin; the user device obtains the movement velocity of the sensed object and obtains the sensitivity of the receiver of the user device; the user device determines the first transmission power based on the sensing signal power parameter and the receiver sensitivity, and determines the sensing signal transmission power based on the first transmission power and the movement velocity of the sensed object.

In the above embodiment, the network device determines the sensing signal power parameter based on the characteristic of the sensing service, and the user device determines the sensing signal transmission power based on the sensing signal power parameter, the movement velocity of the sensed object, and the sensitivity of the receiver on the user device. That is, the sensing signal transmission power is determined based on the characteristic of the sensing service, the movement velocity of the sensed object, and the receiver performance of the user device, so as to achieve a reasonable determination of the sensing signal transmission power and avoid unnecessary interference of the transmitted sensing signal to other devices.

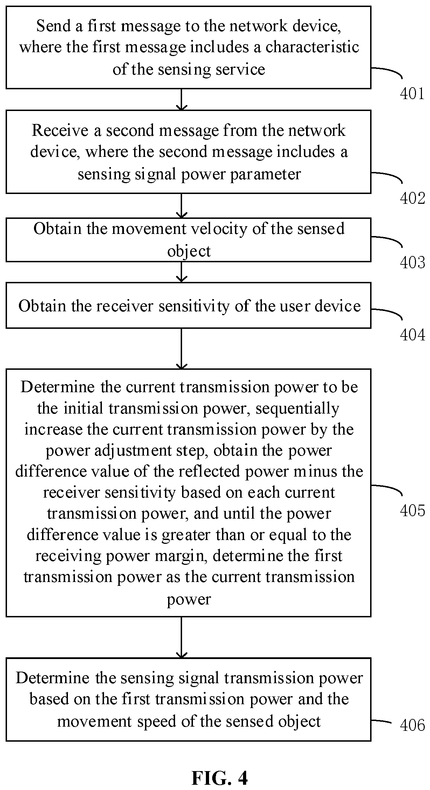

Embodiments of the present disclosure provide a sensing signal power control method, which is executed by a user device. This method can be executed independently or in conjunction with any other embodiment of the present disclosure. FIG. 4 is a flow chart of a sensing signal power control method according to an exemplary embodiment. As shown in FIG. 4, the method includes:
Step 401: Send a first message to the network device, where the first message includes a characteristic of the sensing service;
Step 402: Receive a second message from the network device, where the second message includes a sensing signal power parameter;
Step 403, Obtain the movement velocity of the sensed object;
Step 404: Obtain the receiver sensitivity of the user device;
Step 405: Determine the current transmission power to be the initial transmission power, sequentially increase the current transmission power by the power adjustment step, transmit a sensing signal based on each current transmission power, obtain the reflected power of the reflection signal of the sensing signal, obtain the power difference value of the reflected power minus the receiver sensitivity, and until the power difference value is greater than or equal to the receiving power margin, determine the first transmission power as the current transmission power;
Step 406: Determine the sensing signal transmission power based on the first transmission power and the movement velocity of the sensed object;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, and the sensing signal power parameters including at least one of the following: maximum allowable transmission power, initial transmission power, power adjustment step, and receiving power margin; the user device obtains the movement velocity of the sensed object and obtains the sensitivity of the receiver on the user device; the user device determines the current transmission power to be the initial transmission power, and the current transmission power is sequentially incremented by the power adjustment step to obtain the updated current transmission power, based on each current transmission power, the following operations are performed in loop: obtain the reflected power of the reflected signal of the sensing signal, and obtain the power difference value of the reflected power minus the receiver sensitivity; and until the power difference value is greater than or equal to the receiving power margin, the first transmission power is determined to be the current transmission power based on the current loop of operation, and the sensing signal transmission power is determined based on the first transmission power and the movement velocity of the sensed object.

In one embodiment, the user device sends a first message to the network device, the first message including the characteristic of the sensing service, and then receives a second message from the network device, the second message including the sensing signal power parameter, and the sensing signal power parameter including at least one of the following: maximum allowable transmission power, initial transmission power, power adjustment step, and receiving power margin; the user device obtains the movement velocity of the sensed object and obtains the sensitivity of the receiver; the user device determines the current transmission power to be the initial transmission power, and performs the following operations:
a) Transmit the sensing signal with the current transmission power;
b) Receive the reflected signal of the sensing signal and obtain the reflected power of the reflected signal;
c) Subtract the receiver sensitivity from the reflected power to obtain the power difference;
d) Determine whether the power difference is greater than or equal to the receiving power margin, if not, increase the current transmission power by the power adjustment step to obtain the new current transmission power, and continue to perform operations a) to d); and if yes, determine the first transmission power to be the current transmission power;

Then, the user device determines the sensing signal transmission power based on the first transmission power and the movement velocity of the sensed object.

In the above embodiment, the network device determines the sensing signal power parameter based on the characteristic of the sensing service, and the user device determines the sensing signal transmission power based on the sensing signal power parameter, the movement velocity of the sensed object, and the sensitivity of the receiver on the user device. That is, the sensing signal transmission power is determined based on the characteristic of the sensing service, the movement velocity of the sensed object, and the receiver performance of the user device, so as to achieve a reasonable determination of the sensing signal transmission power and avoid unnecessary interference of the transmitted sensing signal to other device.

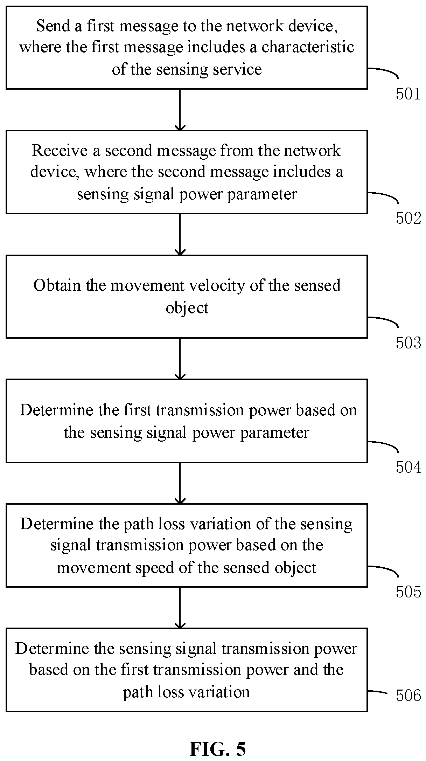

Embodiments of the present disclosure provide a sensing signal power control method, which is executed by a user device. This method can be executed independently or in conjunction with any other embodiment of the present disclosure. FIG. 5 is a flow chart of a sensing signal power control method according to an exemplary embodiment. As shown in FIG. 5, the method includes:
Step 501: Send a first message to the network device, where the first message includes a characteristic of the sensing service;
Step 502: Receive a second message from the network device, where the second message includes a sensing signal power parameter;
Step 503, Obtain the movement velocity of the sensed object;
Step 504: Determine the first transmission power based on the sensing signal power parameter;
Step 505: Determine the path loss variation of the sensing signal transmission power based on the movement velocity of the sensed object;
Step 506: Determine the sensing signal transmission power based on the first transmission power and the path loss variation;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, and the sensing signal power parameters including at least one of the following: maximum allowable transmission power, initial transmission power, power adjustment step, and receiving power margin; the user device obtains the movement velocity of the sensed object; the user device determines the first transmission power based on the sensing signal power parameter; the user device determines the path loss variation of the sensing signal transmission power based on the movement velocity of the sensed object, and determines the sensing signal transmission power based on the first transmission power and the path loss variation.

In one embodiment, the user device sends a first message to the network device, the first message including the characteristic of the sensing service, and then receives a second message from the network device, the second message including the sensing signal power parameter, and the sensing signal power parameter including at least one of the following: maximum allowable transmission power, initial transmission power, power adjustment step, and receiving power margin; the user device obtains the movement velocity of the sensed object; the user device obtains the receiver sensitivity of the user device, and determines the first transmission power based on the sensing signal power parameter and receiver sensitivity; the user device determines the path loss variation of the sensing signal transmission power based on the movement velocity of the sensed object, and determines the sensing signal transmission power based on the first transmission power and the path loss variation.

In one embodiment, the user device sends a first message to the network device, the first message including the characteristic of the sensing service, and then receives a second message from the network device, the second message including the sensing signal power parameter, the sensing signal power parameter including at least one of the following: maximum allowable transmission power, initial transmission power, power adjustment step, and receiving power margin; the user device obtains the movement velocity of the sensed object and obtains the receiver sensitivity of the user device; the current transmission power is determined as the initial transmission power, the current transmission power is sequentially incremented by the power adjustment step, a sensing signal is transmitted based on each current transmission power, the reflected power of the reflected signal of the sensing signal is obtained, and the power difference of the reflected power minus the sensitivity of the receiver is obtained, until the power difference is greater than or equal to the receiving power margin, the first transmission power is determined to be the current transmission power; the user device determines the path loss variation of the sensed signal transmission power based on the movement velocity of the sensed object, and determines the sensing signal transmission power based on the first transmission power and the path loss variation.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

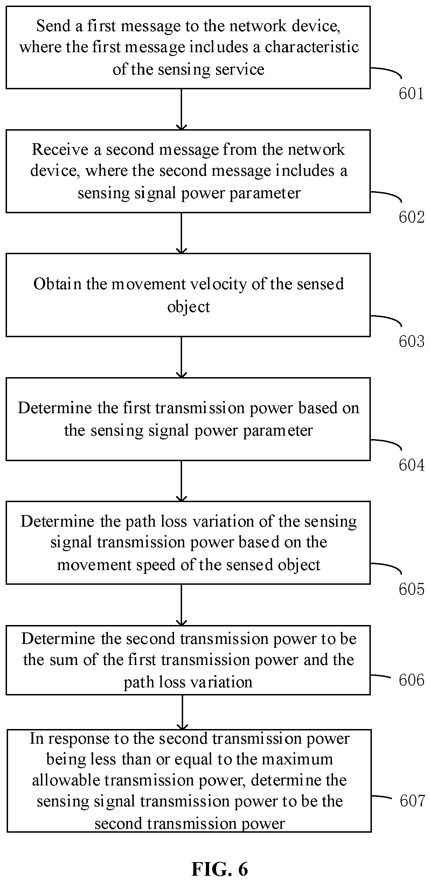

Embodiments of the present disclosure provide a sensing signal power control method, which is executed by a user device. This method can be executed independently or in conjunction with any other embodiment of the present disclosure. FIG. 6 is a flow chart of a sensing signal power control method according to an exemplary embodiment. As shown in FIG. 6, the method includes:
Step 601: Send a first message to the network device, where the first message includes a characteristic of the sensing service;
Step 602: Receive a second message from the network device, where the second message includes a sensing signal power parameter;
Step 603, Obtain the movement velocity of the sensed object;
Step 604: Determine the first transmission power based on the sensing signal power parameter;
Step 605: Determine the path loss variation of the sensing signal transmission power based on the movement velocity of the sensed object;
Step 606: Determine the second transmission power to be the sum of the first transmission power and the path loss variation;
Step 607: In response to the second transmission power being less than or equal to the maximum allowable transmission power, determine the sensing signal transmission power to be the second transmission power;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, the sensing signal power parameter including at least one of the following: maximum allowable transmission power, initial transmission power, power adjustment step, and receiving power margin; the user device obtains the movement velocity of the sensed object; the user device determines the first transmission power based on the sensing signal power parameter; the user device determines the path loss variation of the sensed signal transmission power based on the movement velocity of the sensed object, adds the first transmission power and the path loss variation to obtain the second transmission power, and in response to the second transmission power being less than or equal to the maximum allowable transmission power, determines the sensing signal transmission power as the second transmission power.

In one embodiment, the user device sends a first message to the network device, the first message including the characteristic of the sensing service, and then receives a second message from the network device, the second message including the sensing signal power parameter, the sensing signal power parameter including at least one of the following: maximum allowable transmission power, initial transmission power, power adjustment step, and receiving power margin; the user device obtains the movement velocity of the sensed object; the user device obtains the receiver sensitivity of the user device, and determines the first transmission power based on the sensing signal power parameter and receiver sensitivity; the user device determines the path loss variation of the sensing signal transmission power based on the movement velocity of the sensed object, adds the first transmission power and the path loss variation to obtain the second transmission power, and in response to the second transmission power being less than or equal to the maximum allowable transmission power, determines the sensing signal transmission power to be the second transmission power.

In one embodiment, the user device sends a first message to the network device, the first message including the characteristic of the sensing service, and then receives a second message from the network device, the second message including the sensing signal power parameter, the sensing signal power parameter including at least one of the following: maximum allowable transmission power, initial transmission power, power adjustment step, and receiving power margin; the user device obtains the movement velocity of the sensed object and obtains the receiver sensitivity of the user device, determines the current transmission power as the initial transmission power, sequentially increases the current transmission power by power adjustment steps, transmits sensing signals based on each current transmission power, obtains the reflected power of the reflected signal of the sensing signal, obtains the power difference of the reflected power minus the sensitivity of the receiver, and until the power difference is greater than or equal to the receiving power margin, determines the first transmission power to be the current transmission power; the user device determines the path loss variation of the sensed signal transmission power based on the movement velocity of the sensed object, and obtains the second transmission power by adding the first transmission power and the path loss variation; and in response to the second transmission power being less than or equal to the maximum allowable transmission power, determines the sensing signal transmission power to be the second transmission power.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

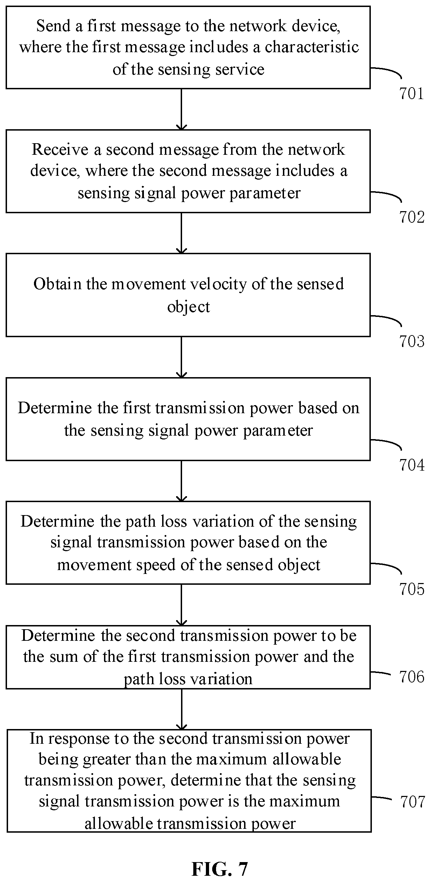

Embodiments of the present disclosure provide a sensing signal power control method, which is executed by user device. This method can be executed independently or in conjunction with any other embodiment of the present disclosure. FIG. 7 is a flow chart of a sensing signal power control method according to an exemplary embodiment. As shown in FIG. 7, the method includes:
Step 701: Send a first message to the network device, where the first message includes a characteristic of the sensing service;
Step 702: Receive a second message from the network device, where the second message includes a sensing signal power parameter;
Step 703, Obtain the movement velocity of the sensed object;
Step 704: Determine the first transmission power based on the sensing signal power parameter;
Step 705: Determine the path loss variation of the sensing signal transmission power based on the movement velocity of the sensed object;
Step 706: Determine the second transmission power to be the sum of the first transmission power and the path loss variation;
Step 707: In response to the second transmission power being greater than the maximum allowable transmission power, determine that the sensing signal transmission power is the maximum allowable transmission power;

Wherein, the sensing signal power parameter includes at least one of the following: maximum allowable transmission power, initial transmission power, power adjustment step, and receiving power margin.

In one embodiment, the user device sends a first message to the network device, the first message including the characteristic of the sensing service, and then receives a second message from the network device, the second message including the sensing signal power parameter, and the sensing signal power parameter includes at least one of the following: maximum allowable transmission power, initial transmission power, power adjustment step, and receiving power margin; the user device obtains the movement velocity of the sensed object; the user device determines the first transmission power based on the sensing signal power parameter; the user device determines the path loss variation of the sensed signal transmission power based on the movement velocity of the sensed object, adds the first transmission power and the path loss variation to obtain the second transmission power, and when the second transmission power is greater than the maximum allowable transmission power, determines the sensing signal transmission power to be the maximum allowable transmission power.

In one embodiment, the user device sends a first message to the network device, the first message including the characteristic of the sensing service, and then receives a second message from the network device, the second message including the sensing signal power parameter, and the sensing signal power parameter including at least one of the following: maximum allowable transmission power, initial transmission power, power adjustment step, and receiving power margin; the user device obtains the movement velocity of the sensed object; the user device obtains the receiver sensitivity of the user device, and determines the first transmission power based on the sensing signal power parameter and the receiver sensitivity; the user device determines the path loss variation of the sensing signal transmission power based on the movement velocity of the sensed object, adds the first transmission power and the path loss variation to obtain the second transmission power, and when the second transmission power is greater than the maximum allowable transmission power, determines the sensing signal transmission power to be the maximum allowable transmission power.

In one embodiment, the user device sends a first message to the network device, the first message including the characteristic of the sensing service, and then receives a second message from the network device, the second message including the sensing signal power parameter, the sensing signal power parameter including at least one of the following: maximum allowable transmission power, initial transmission power, power adjustment step, and receiving power margin; the user device obtains the movement velocity of the sensed object and obtains the receiver sensitivity of the user device, determines the current transmission power as initial transmission power, sequentially increase the current transmission power by the power adjustment step, transmits a sensing signal based on each current transmission power, obtains the reflected power of the reflected signal of the sensing signal, obtains the power difference of the reflected power minus the sensitivity of the receiver value, and until the power difference is greater than or equal to the receiving power margin, determines the first transmission power to be the current transmission power; the user device determines the path loss variation of the sensed signal transmission power based on the movement velocity of the sensed object, obtains the second transmission power by adding the first transmission power and the path loss variation, and when the second transmission power is greater than the maximum allowable transmission power, determines the sensing signal transmission power to be the maximum allowable transmission power.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

Embodiments of the present disclosure provide a sensing signal power control method, which is executed by user device. This method can be executed independently or in conjunction with any other embodiment of the present disclosure. The method includes: sending a first message to a network device, where the first message includes a characteristic of a sensing service; receiving a second message from the network device, where the second message includes a sensing signal power parameter; obtaining a movement velocity of a sensed object; and determining the sensing signal transmission power based on the sensing signal power parameter and the movement velocity of the sensed object; wherein the movement velocity of the sensed object is the radial movement speed of the sensed object.

In one embodiment, the user device sends a first message to the network device, the first message including the characteristic of the sensing service, and then receives a second message from the network device, the second message including the sensing signal power parameter; the user device obtains the radial movement speed of the sensed object, and determines the sensing signal transmission power based on the sensing signal power parameters and the movement velocity of the sensed object.

In one embodiment, the user device sends a first message to the network device, the first message including the characteristic of the sensing service, and then receives a second message from the network device, the second message including the sensing signal power parameter, and the sensing signal power parameter including at least one of the following: maximum allowable transmission power, initial transmission power, power adjustment step, and receiving power margin; the user device obtains the movement velocity of the sensed object, and determines the sensing signal transmission power based on the sensing signal power parameter and the movement velocity of the sensed object.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

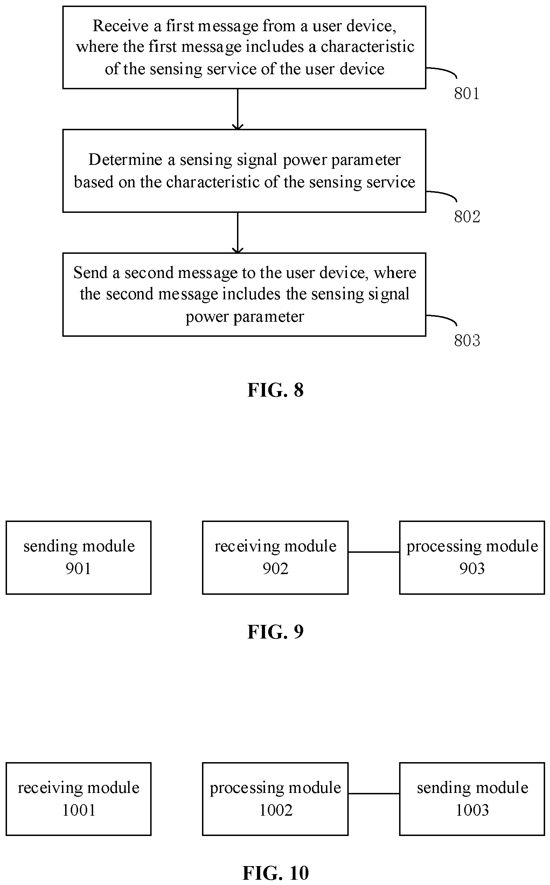

Embodiments of the present disclosure provide a sensing signal power control method, which is executed by a network device. This method can be executed independently or in conjunction with any other embodiment of the present disclosure. FIG. 8 is a flow chart of a sensing signal power control method according to an exemplary embodiment. As shown in FIG. 8, the method includes:
Step 801: Receive a first message from a user device, where the first message includes a characteristic of the sensing service of the user device;
Step 802: Determine a sensing signal power parameter based on the characteristic of the sensing service; and
Step 803: Send a second message to the user device, where the second message includes the sensing signal power parameter.

In one embodiment, the network device receives a first message from the user device, where the first message includes a characteristic of the sensing service of the user device; the network device determines the sensing signal power parameter based on the received characteristic of the sensing service, and then sends the sensing signal power parameters to the user device using the second message.

In one embodiment, the network device receives a first message from the user device. The first message includes the characteristic of the user device's sensing service. The characteristic of the sensing service include at least one of the following: sensing distance, sensing range, size of the sensed object, shape of the sensed object, and motion state of the sensed object; the network device determines the sensing signal power parameter based on the characteristic of the received sensing service, and then sends the sensing signal power parameters to the user device through the second message.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

Embodiments of the present disclosure provide a sensing signal power control method, which is executed by a network device. This method can be executed independently or in conjunction with any other embodiment of the present disclosure. The method includes: receiving a first message from a user device, the first message including a characteristic of a sensing service of the user device; determining a sensing signal power parameter based on the characteristic of the sensing service; and sending a second message to the user device, the second message including the sensing signal power parameter; wherein the sensing signal power parameter includes at least one of the following: maximum allowable transmission power, initial transmission power, power adjustment step, and receiving power margin.

In one embodiment, the network device receives a first message from the user device, where the first message includes the characteristic of the sensing service of the user device; the network device determines the sensing signal power parameter based on the characteristics of the received sensing service, the sensing signal power parameter including at least one of the following: maximum allowable transmission power, initial transmission power, power adjustment step, and receiving power margin; and then the sensing signal power parameter is sent to the user device through the second message.

In one embodiment, the network device receives a first message from the user device. The first message includes a characteristic of the user device 's sensing service. The characteristic of the sensing service includes at least one of the following: sensing distance, sensing range, size of the sensed object, shape of the sensed object, and motion state of the sensed object; the network device determines the sensing signal power parameter based on the characteristic of the received sensing services. The sensing signal power parameter includes at least one of the following: maximum allowable transmission power, initial transmission power, power adjustment step, receiving power margin; and then the sensing signal power parameter is sent to the user device through the second message.

It should be noted that the network device can determine the maximum allowable transmission power, initial transmission power, power adjustment step, and receiving power margin based on the characteristic of the sensing service. It can also determine part of the maximum allowable transmission power, initial transmission power, power adjustment step, and receiving power margin.

In the above embodiment, the network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

Embodiments of the present disclosure provide an apparatus for allocating sensing resource, applied to a network device, as shown in FIG. 9, including:
a sending module 901, configured to send a first message to the network device, where the first message includes a characteristic of the sensing service;
a receiving module 902, configured to receive a second message from the network device, where the second message includes a sensing signal power parameter; and
a processing module 903, configured to obtain the movement velocity of the sensed object, and determine the sensing signal transmission power based on the sensing signal power parameter and the movement velocity of the sensed object.

Embodiments of the present disclosure provide an apparatus for using the sensing resource, applied to a user device, as shown in FIG. 10, including:
a receiving module 1001, configured to receive a first message from the user device, where the first message includes a characteristic of the sensing service of the user device;
a processing module 1002, configured to determine the sensing signal power parameter based on the characteristic of the sensing service; and
a sending module 1003, configured to send a second message to the user device, where the second message includes the sensing signal power parameter.

Embodiments of the present disclosure provide a network side device, including:
a processor; and
a memory used to store instructions executable by the processor;
wherein, the processor is configured to execute executable instructions in the memory to implement the steps of the above sensing signal power control method.

Embodiments of the present disclosure provide a mobile terminal, including:
a processor; and
a memory used to store instructions executable by the processor;
wherein, the processor is configured to execute executable instructions in the memory to implement the steps of the above sensing signal power control method.

Embodiments of the present disclosure provide a non-transitory computer-readable storage medium on which executable instructions are stored. When the executable instructions are executed by a processor, the steps of the sensing signal power control method are implemented.

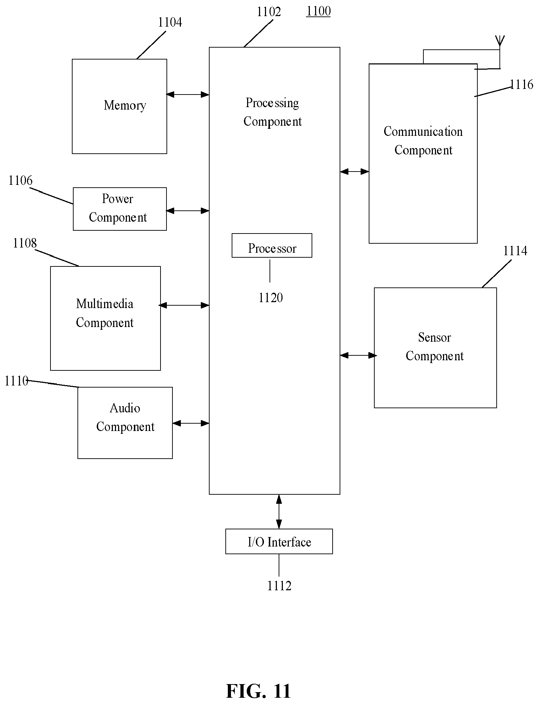

FIG. 11 is a block diagram of an apparatus 1100 for sensing signal power control according to an exemplary embodiment. For example, the apparatus 1100 may be a mobile phone, computer, digital broadcast terminal, messaging device, game console, tablet device, medical device, fitness device, personal digital assistant, or the like.

Referring to FIG. 11, the apparatus 1100 may include one or more of the following components: a processing component 1102, a memory 1104, a power supply component 1106, a multimedia component 11011, an audio component 1110, an input/output (I/O) interface 1112, a sensor component 1114, and a communication component 1116.

The processing component 1102 generally controls the overall operations of the apparatus 1100, such as operations associated with display, telephone calls, data communications, camera operations, and recording operations. The processing component 1102 may include one or more processors 1120 to execute instructions to complete all or part of the steps of the above method. Additionally, processing component 1102 may include one or more modules that facilitate interaction between processing component 1102 and other components. For example, processing component 1102 may include a multimedia module to facilitate interaction between multimedia component 1108 and processing component 1102.

The memory 1104 is configured to store various types of data to support operations at the apparatus 1100. Examples of such data include instructions for any application or method operating on the apparatus 1100, contact data, phonebook data, messages, pictures, videos, etc. The memory 1104 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 1106 provides power to various components of the apparatus 1100. The power component 1106 may include a power management system, one or more power supplies, and other components associated with generating, managing, and distributing power for apparatus 1100.

The multimedia component 1108 includes a screen providing an output interface between the apparatus 1100 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 1108 includes a front camera and/or a rear camera. When the apparatus 1100 is in an operation mode, such as a photographing mode or a video mode, the front camera and/or the rear camera can receive external multimedia data. Each front camera and rear camera can be a fixed optical lens system or have focal length and optical zoom capability.

The audio component 1110 is configured to output and/or input audio signals. For example, the audio component 1110 includes a microphone (MIC), which is configured to receive an external audio signal when the apparatus 1100 is in an operation mode, such as a call mode, a recording mode and a voice recognition mode. Received audio signals may be further stored in memory 1104 or sent via communication component 1116. In some embodiments, the audio component 1110 also includes a speaker for outputting audio signals.

The I/O interface 1112 provides an interface between the processing component 1102 and a peripheral interface module, which may be a keyboard, a click wheel, a button, and the like. These buttons may include, but are not limited to: a home button, volume buttons, start button, and lock button.

The sensor component 1114 includes one or more sensors for providing apparatus 1100 with various aspects of status assessment. For example, the sensor component 1114 can detect the open/closed state of the apparatus 1100, the relative positioning of components, such as the display and the keypad of the apparatus 1100, the sensor component 1114 can also detect the apparatus 1100 or a change in the position of a component of the apparatus 1100, the presence or absence of user's contact with the apparatus 1100, the change of orientation or acceleration/deceleration of the apparatus 1100 and the temperature change of the apparatus 1100. The sensor component 1114 may include a proximity sensor configured to detect the presence of nearby objects in the absence of any physical contact. The sensor component 1114 may also include an optical sensor, such as a CMOS or CCD image sensor, for use in imaging applications. In some embodiments, the sensor component 1114 may also include an acceleration sensor, a gyroscope sensor, a magnetic sensor, a pressure sensor or a temperature sensor.

The communication component 1116 is configured to facilitate wired or wireless communication between the apparatus 1100 and other devices. The apparatus 1100 can access a wireless network based on communication standards, such as Wi-Fi, 2G or 3G, or a combination thereof. In an exemplary embodiment, the communication component 1116 receives broadcast signals or broadcast related information from an external broadcast management system via a broadcast channel. In an exemplary embodiment, the communication component 1116 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, apparatus 1100 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 1104 including instructions, which can be executed by the processor 1120 of the apparatus 1100 to implement the above method. For example, the non-transitory computer readable storage medium may be ROM, random access memory (RAM), CD-ROM, magnetic tape, floppy disk, and optical data storage device, and the like.

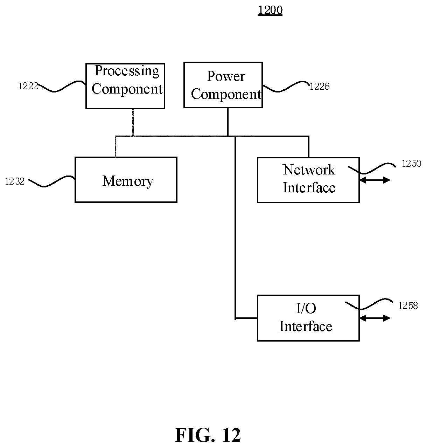

FIG. 12 is a block diagram of the apparatus 1200 for sensing signal power control according to an exemplary embodiment. For example, the apparatus 1200 may be provided as a base station. Referring to FIG. 12, the apparatus 1200 includes a processing component 1222, which further includes one or more processors, and a memory resource represented by a memory 1232 for storing instructions executable by the processing component 1222, such as application programs. The application program stored in memory 1232 may include one or more modules each corresponding to a set of instructions. In addition, the processing component 1222 is configured to execute instructions, so as to perform the above access method for unlicensed channel.

The apparatus 1200 may also include a power component 1226 configured to perform power management of the apparatus 1200, a wired or wireless network interface 1250 configured to connect the apparatus 1200 to a network, and an input-output (I/O) interface 1258. The apparatus 1200 can operate based on an operating system stored in the memory 1232, such as Windows Server^{™}, Mac OS X^{™}, Unix^{™}, Linux^{™}, FreeBSD^{™} or the like.

Other embodiments of the embodiment of the present disclosure will be readily apparent to those skilled in the art from consideration of the specification and practice of the invention disclosed herein. This application is intended to cover any modification, use or adaptation of the embodiment of the present disclosure, these modifications, uses or adaptations follow the general principles of the embodiment of the present disclosure and include common knowledge or conventional technical means in the technical field not disclosed in this disclosure. The specification and examples are to be considered exemplary only, with a true scope and spirit of the embodiment of the present disclosure being indicated by the following claims.

It should be understood that the embodiment of the present disclosure is not limited to the precise constructions which have been described above and shown in the accompanying drawings, and various modifications and changes may be made without departing from the scope thereof. The scope of the embodiment of the present disclosure is limited only by the appended claims.

### Industrial applicability

The network device determines the sensing signal power parameter based on the characteristic of the sensing service, and the user device determines the sensing signal transmission power based on the sensing signal power parameter and the movement velocity of the sensed object. That is, the sensing signal transmission power is determined based on the characteristic of the sensing service and the movement velocity of the sensed object, so as to achieve a reasonable determination of the sensing signal transmission power and avoid unnecessary interference of the transmitted sensing signal to other devices.

## Claims

1. A method for controlling sensing signal power, executed by a user device, comprising:
sending a first message to a network device, the first message comprising a characteristic of a sensing service;
receiving a second message from the network device, the second message comprising a sensing signal power parameter;
obtaining a movement velocity of the perceived object; and
determining a sensing signal transmission power based on the sensing signal power parameter and the movement velocity of the sensed object.

2. The method according to claim 1, wherein the sensing signal power parameter comprises at least one of
maximum allowable transmission power, initial transmission power, power adjustment step, and receiving power margin.

3. The method according to claim 2, wherein the determining the sensing signal transmission power based on the sensing signal power parameter and the movement velocity of the sensed object comprises:
determining a first transmission power based on the sensing signal power parameter; and
determining the sensing signal transmission power based on the first transmission power and the movement velocity of the sensed object.

4. The method according to claim 3, wherein determining the first transmission power based on the sensing signal power parameter comprises:
obtaining a receiver sensitivity of the user device; and
determining the first transmission power based on the sensing signal power parameter and the receiver sensitivity.

5. The method according to claim 4, wherein determining the first transmission power based on the sensing signal power parameter and the receiver sensitivity comprises:
determining a current transmission power to be the initial transmission power, and sequentially increasing the current transmission power by the power adjustment step; and
transmitting the sensing signal based on each current transmission power, obtaining a reflected power of a reflected signal of the sensing signal, obtaining a power difference value of the reflected power minus the receiver sensitivity, and until the power difference value is greater than or equal to the receiving power margin, determining the first transmission power to be the current transmission power.

6. The method according to claim 3, wherein determining the sensing signal transmission power based on the first transmission power and the movement velocity of the sensed object comprises:
determining a path loss variation of the sensing signal transmission power based on the movement velocity of the sensed object; and
determining the sensing signal transmission power based on the first transmission power and the path loss variation.

7. The method according to claim 6, wherein determining the sensing signal transmission power based on the first transmission power and the path loss variation comprises:
determining a second transmission power to be a sum of the first transmission power and the path loss variation; and
in response to the second transmission power being less than or equal to a maximum allowable transmission power, determining the sensing signal transmission power to be the second transmission power.

8. The method according to claim 6, wherein determining the sensing signal transmission power based on the first transmission power and the path loss variation comprises:
determining a second transmission power to be a sum of the first transmission power and the path loss variation; and
in response to the second transmission power being greater than a maximum allowable transmission power, determining the sensing signal transmission power to be the maximum allowable transmission power.

9. The method according to claim 1, wherein the movement velocity of the sensed object is a radial movement speed of the sensed object.

10. A method for controlling sensing signal power, executed by a network device, comprising:
receiving a first message from a user device, the first message comprising a characteristic of a sensing service of the user device;
determining a sensing signal power parameter based on the characteristic of the sensing service; and
sending a second message to the user device, the second message comprising the sensing signal power parameter.

11. The method according to claim 10, wherein the sensing signal power parameter comprises at least one of
maximum allowable transmission power, initial transmission power, power adjustment step, and receiving power margin.

12. An apparatus for allocating sensing resource, applied to a network device, comprising:
a sending module, configured to send a first message to a network device, the first message comprising a characteristic of a sensing service;
a receiving module, configured to receive a second message from the network device, the second message comprising a sensing signal power parameter; and
a processing module configured to obtain a movement velocity of the perceived object, and determine a sensing signal transmission power based on the sensing signal power parameter and the movement velocity of the sensed object.

13. An apparatus for using sensing resource, applied to a user device, comprising:
a receiving module, configured to receive a first message from a user device, the first message comprising a characteristic of a sensing service of the user device;
a processing module, configured to determine a sensing signal power parameter based on the characteristic of the sensing service; and
a sending module, configured to send a second message to the user device, the second message comprising the sensing signal power parameter.

14. A network side device, comprising:
a processor; and
a memory used to store instructions executable by the processor;
wherein, the processor is configured to execute executable instructions in the memory to implement steps of the method for controlling sensing signal power according to any one of claims 1-9.

15. A mobile terminal, comprising:
a processor; and
a memory used to store instructions executable by the processor;
wherein, the processor is configured to execute executable instructions in the memory to implement steps of the method for controlling sensing signal power according to any one of claims 10 to 11.

16. A non-transitory computer-readable storage medium on which executable instructions are stored, when the executable instructions are executed by a processor, steps of the method for controlling sensing signal power according to any one of claims 1-9, or steps of the method for controlling sensing signal power according to any one of claims 10 to 11 are implemented.
